# EUROPEAN PATENT APPLICATION

(11) **EP 2 474 469 A1**
(43) Date of publication of application: **11.07.2012**
(21) Application number: 11400004.5
(22) Date of filing: 11.01.2011
(51) Int. Cl.: B64C 11/00, B64C 27/00

(54) **Device for adaptive balancing of rotary devices**

(71) Applicant: Eurocopter Deutschland GmbH, 86609 Donauwörth (DE)
(72) Inventor: Hoffmann, Falk, 85625 Glonn (DE); Konstanzer, Peter, 85521 Riemerling (DE); Znika, Peter, 85521 Ottobrunn (DE)
(74) Representative: Pouillot, Laurent Pierre Paul

(57) **Abstract**

The present invention relates to a Rotary device associated to drive means, said rotary device comprising a shaft and/or a hub and balancing means for balancing its rotational motion, characterized in that the balancing means comprise a hollow chamber surrounding the hub and a solid/fluidic material with thixotropic properties, which fills partly the hollow chamber.

## Description

The present invention relates to the general technical field of balancing rotary devices, hubs or shafts, which are used in for instance in the aeronautic industry.

The invention concerns more particularly rotary wings aircrafts or fixed wings aircrafts. The invention is applied for instance in main rotor balancing, tail rotor (such as Fenestron) balancing of helicopters or tilt rotor balancing.

Although the application to aircrafts is described more in detail, the invention can be used for any rotors such as propellers, wind mills and all shafts and engines.

Any rotary device, such as a hub or a shaft, needs to be balanced in order to reduce the risk of premature wear or failure over time and to improve pilot and customer comfort.

Additionally, with the known balancing systems, it is often not possible to obtain balanced device in different working/operating conditions. This is the case for instance on an aircraft for which different flight conditions may lead to a different balancing for each or for some of the flight conditions.

Moreover, the known balancing procedures are also costly and time consuming due to the fact that balancing flights are used.

Consequently the objective of the present invention is to remedy the aforementioned disadvantages and to propose an improved balancing means for rotary devices of all kind.

Another objective of the invention is to provide a rotary device with very simple, reliable and effective balancing means.

Another objective of the invention is to provide new balancing means which could balance a rotary device in many working/operating conditions.

The objectives of the invention are achieved using a rotary device associated to drive means, said rotary device comprising a shaft and/or a hub and balancing means for balancing its rotational motion, characterized in that the balancing means comprise a hollow chamber surrounding the hub and a solid/fluidic material with thixotropic properties, which fills partly the hollow chamber.

Thixotropy is the property of certain fluids or gels that are viscous under normal conditions, but that become less viscous over time when stressed. In other words, such materials are non-Newtonian pseudo plastic fluids that show a time dependent change in viscosity. The longer the fluid undergoes shear stress; the lower is its viscosity. A thixotropic fluid displays a decrease in viscosity over time at a constant shear rate.

The solid/fluidic material acts as a moving mass compensating the imbalance of the component to balance due to its thixotropic characteristics. An optimal balancing is so obtained.

In case the imbalance is to change due to changing working/operating conditions the solid/fluidic material will automatically adapt its mass distribution within the chamber to compensate this change.

According to an implementation example of the rotary device conforming to the invention, the solid/fluidic material is a gel.

According to an implementation example of the rotary device conforming to the invention, the hollow chamber is filled with the solid/fluidic material with a percentage lying in the range of 25% - 70%, preferably between 40% - 60%, and preferably around 50%.

According to an implementation example of the rotary device conforming to the invention, the hollow chamber has an annular shape. The hollow chamber may also be shaped as prolate or oblate spheroid, cylinders, rectangular, parallelepipeds, spheres or any combination of such shapes.

According to an implementation example of the rotary device conforming to the invention, the hollow chamber comprises shoulder means on at least one inner face in order to impart centrifugal forces to the solid/fluidic material.

According to an implementation example conforming to the invention, the rotary device is part of a main rotor of a helicopter.

According to another implementation example conforming to the invention, the rotary device is part of a tail rotor of a helicopter.

According to another implementation example conforming to the invention, the rotary device is part of a rotor of a fixed wings aircraft.

According to an implementation example of the rotary device conforming to the invention, the hollow chamber comprises two openings for the introduction of the solid/fluidic material.

An advantage of the rotary device conforming to the invention, resides in its auto-adaptive rotor balancing. The imbalance is automatically neutralized.

This adaptive balancing applied to an aircraft, leads to an optimal flight comfort during all flight conditions.

This adaptive balancing also leads to cost savings due to the fact that no balance flights are necessary, that a reduced H/C down time is obtained and that no balance weights are necessary. This may lead to simplifications in the blade design of a rotor.

Another advantage of the adaptive rotor balancing according to the invention is that it is easily retrofittable to any helicopter for instance by modifying its rotor hub cap.

The invention and its advantages will appear with greater detail in conjunction with the description which follows with execution and implementation examples, given as illustration and without limitation, with reference to the attached figures which shows:
- figure 1, illustrates a top view of a sectional representation of an embodiment of a rotary device according to the invention, and,
- figure 2, illustrates a sectional front elevation along line AA of figure 1.

The identical structural and functional elements, which are shown in several different figures or illustrations, are given one single numeric or alphanumeric reference.

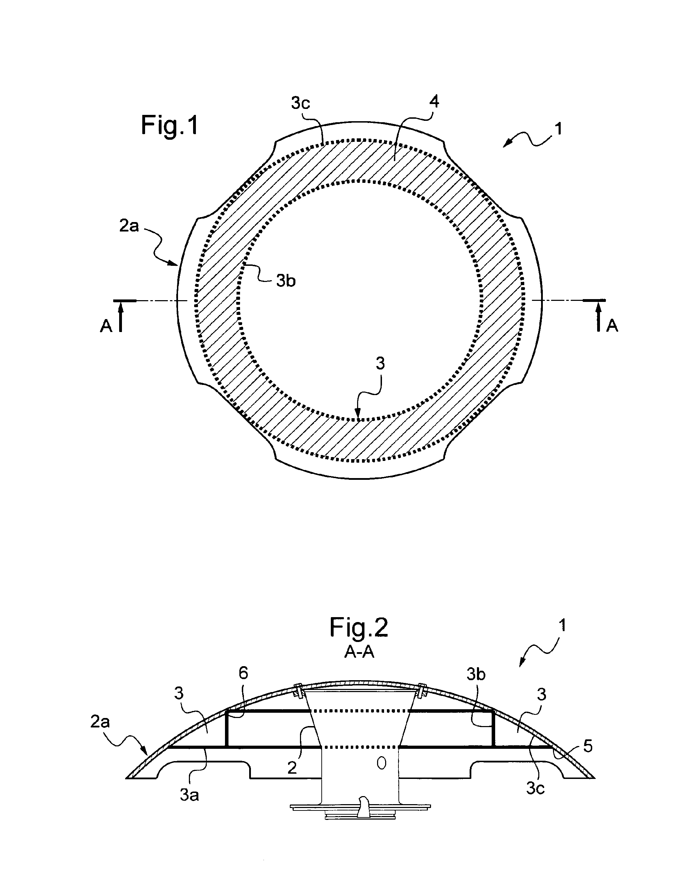

Figure 1 illustrates a top view of a sectional representation of an embodiment of a rotary device 1 according to the invention. This rotary device is a part of a main rotor of a helicopter.
Figure 2 illustrates a sectional front elevation along line AA of figure 1.

The rotary device 1 is associated to drive means, not shown, and is comprising a main rotor hub 2, a hub cap 2a and balancing means for balancing its rotational motion.

The balancing means comprise a hollow chamber 3 surrounding the hub 2 and a solid/fluidic material 4 with thixotropic properties, which fills partly the said hollow chamber 3.

The hollow chamber 3 is delimited by a bottom face 3a, an inner face 3b and an outer face 3c which is a portion of the hub cap 2. The outer face 3c joins the bottom face 3a on its radial and external end 5 and the top end 6 of the inner face 3b. The outer face 3c is so sealing the hollow chamber 3.

The hollow chamber 3 is rotating with the hub 2. Imbalances will locally rise the pressure on the solid/fluidic material 4 in this local area. The solid/fluidic material becomes less viscous and flows away in the chamber 3 until reaching the balanced conditions.

According to an implementation example of the rotary device 1 conforming to the invention, the solid/fluidic material 4 is preferably a gel and/or any fluidic material with solid components.

The hollow chamber 3 is filled with the solid/fluidic material with a percentage lying in the range of 25% - 70%, preferably between 40% - 60%, in particular around 50%.

The hollow chamber 3 has an annular shape surrounding the nub 2.

According to an implementation example of the rotary device 1 conforming to the invention, the hollow chamber 3 comprises shoulder means on at least one inner face in order to impart centrifugal forces to the solid/fluidic material 4.

The hollow chamber 3 comprises at least two closable openings, not shown, for the introduction, the refilling or the exchange of the solid/fluidic material 4.

Unsurprisingly, the present invention is subject to several variations in terms of its implementation. Although several execution and implementation modes have been described, it is clear that identifying all possible modes exhaustively is inconceivable. It is, of course, possible to replace any feature described above with an equivalent feature and still remain within the scope of the present invention.

## Claims

1. Rotary device (1) associated to drive means, said rotary device (1) comprising a shaft and/or a hub (2) and balancing means for balancing its rotational motion,
**characterized in that** the balancing means comprise a hollow chamber (3) surrounding the shaft and/or the hub (2) and a solid/fluidic material (4) with thixotropic properties, which fills partly the hollow chamber (3).

2. Rotary device (1) according to claim 1,
**characterized in that** the solid/fluidic material (4) is a gel.

3. Rotary device (1) according to claim 1 or 2,
**characterized in that** the hollow chamber (3) is filled with the solid/fluidic material (4) with a percentage lying in the range of 25% - 70%, preferably between 40% - 60% and most preferably around 50%.

4. Rotary device (1) according to any one of the claims 1 to 3,
**characterized in that** the hollow chamber (3) has an annular shape extending around the component to be balanced of the said device.

5. Rotary device (1) according to any one of the claims 1 to 4,
**characterized in that** the hollow chamber (3) comprises shoulder means on at least one inner face in order to impart centrifugal forces to the solid/fluidic material (4).

6. Rotary device (1) according to any one of the claims 1 to 5,
**characterized in that** is part of a main rotor of a helicopter.

7. Rotary device (1) according to any one of the claims 1 to 5,
**characterized in that** it is part of a tail rotor of a helicopter.

8. Rotary device (1) according to any one of the claims 1 to 5,
**characterized in that** it is part of a rotor of a fixed wings aircraft.

9. Rotary device (1) according to any one of the claims 1 to 8,
**characterized in that** the hollow chamber (3) comprises at least two closable openings for the introduction, the refilling or the exchange of the solid/fluidic material (4).

10. Rotary device (1) according to any one of the claims 1 to 9,
**characterized in that** it comprises sensor means for determining the filling level or the weight of the solid/fluidic material (4) in the hollow chamber (3).
